# EUROPÄISCHE PATENTSCHRIFT

(11) **EP 3 766 848 B1**
(45) Veröffentlichungstag und Bekanntmachung des Hinweises auf die Patenterteilung: **02.03.2022**
(21) Anmeldenummer: 19186776.1
(22) Anmeldetag: 17.07.2019
(51) Int. Cl.: C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET DE FABRICATION D'UNE PRÉFORME POUR UNE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); TROMMER, Martin, 63450 Hanau (DE); WEIMANN, Steffen, 63450 Hanau (DE); HÜNERMANN, Michael, 63450 Hanau (DE); SCHUSTER, Kay, 63450 Hanau (DE); TANSEL, Yusuf, 63450 Hanau (DE)
(74) Vertreter: Staudt, Armin Walter

(56) Entgegenhaltungen:
- WO-A1-2019/008352
- A F KOSOLAPOV ET AL: "Hollow-core revolver fibre with a double-capillary reflective cladding", QUANTUM ELECTRONICS., Bd. 46, Nr. 3, 29. März 2016 (2016-03-29), Seiten 267-270, XP055502520, GB ISSN: 1063-7818, DOI: 10.1070/QEL15972
- Fei Yu: "Hollow core negative curvature fibres" In: "University of Bath PhD.", 31. Dezember 2013 (2013-12-31), XP055656461, Seiten 59-74, * Seiten 61-62; Abbildung 4.1 *

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen, die aus mehreren, miteinander verschachtelten rohrförmigen Strukturelementen zusammengesetzt sind, umfassend ein ARE-Außenrohr und ein darin eingesetztes ARE-Innenrohr, wobei die Strukturelemente, eine Strukturelemente-Längsachse aufweisen,
(c) Anordnen der Antiresonanzelement-Vorformlinge an Soll-Positionen der Innenseite der Hüllrohr-Wandung unter Bildung einer primären Vorform für die Hohlkernfaser, die einen hohlen Kernbereich und einen inneren Mantelbereich aufweist, und
(d) Elongieren der primären Vorform zu der Hohlkernfaser oder Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren,

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen, die aus mehreren, miteinander verschachtelten rohrförmigen Strukturelementen zusammengesetzt sind, umfassend ein ARE-Außenrohr und ein darin eingesetztes ARE-Innenrohr, wobei die Strukturelemente, eine Strukturelemente-Längsachse aufweisen,
(c) Anordnen der Antiresonanzelement-Vorformlinge an Soll-Positionen der Innenseite der Hüllrohr-Wandung unter Bildung einer primären Vorform für die Hohlkernfaser, die einen hohlen Kernbereich und einen inneren Mantelbereich aufweist, und
(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

Aus der WO 2019/008352 ist ein Verfahren zur Herstellung einer Vorform für eine antiresonante Hohlkernfaser mit verschachtelten Strukturelementen bekannt. Die Wandstärke der Strukturelemente beträgt z.B. 0,2 mm. Im Paper von A.F. Kosolapov et al. "Hollow-core revolver fibre with a double-capillary reflective cladding" QUANTUM ELECTRONICS., Bd. 46, Nr. 3, Seite 267 (2016) wird ein Verfahren zur Herstellung einer Vorform für eine antiresonante Hohlkernfaser mit verschachtelten Strukturelementen vorgeschlagen.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem ARE-Außenrohr und einseitig an der ARE-Außenrohr-Innenmantelfläche eingeschweißtem ARE-Innenrohr, an der Innenseite eines Hüllrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass ein Hüllrohr mit einem Außendurchmesser im Bereich von 90 und 250 mm und einer Länge von mindestens 1 m bereitgestellt wird, und dass rohrförmige Strukturelemente bereitgestellt werden, von denen mindestens ein Teil eine Wandstärke im Bereich von 0,2 und 2 mm und eine Länge von mindestens 1 m hat, und dass das Anordnen der Strukturelemente in der Hüllrohr-Innenbohrung gemäß Verfahrensschritt (c) bei vertikal orientierter Hüllrohr-Längsachse erfolgt, wobei die Strukturelemente jeweils an ihrem oberen stirnseitigen Ende an der Soll-Position positioniert sind.

Ausgangspunkt für die Herstellung der Antiresonanten Hohlkernfaser ist eine Vorform, die hier auch als "Cane" oder als "primäre Vorform" bezeichnet wird. Sie umfasst ein Hüllrohr, in dem oder an dem Vorstufen oder Vorformlinge für die Ausformung Antiresonananter Elemente in den Hohlkernfasern (hier kurz als "Antiresonanzelemente" bezeichnet) enthalten sind. Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform. Die koaxiale Anordnung aus primärer Vorform und Überfangzylinder wird beim Aufkollabieren des Überfangzylinders elongiert, oder sie wird nicht elongiert. Dabei werden die Antiresonanzelement-Vorformlinge in ihrer Form oder Anordnung verändert, oder sie werden in ihrer Form oder Anordnung nicht verändert.

Die Genauigkeit der Positionierung der Vorformlinge im Hüllrohr wird verbessert, indem rohrförmige Strukturelemente bereitgestellt werden, von denen mindestens ein Teil eine Wandstärke im Bereich von 0,2 und 2 mm, vorzugsweise eine Wandstärke im Bereich von 0,25 und 1 mm, hat, und wobei ein Hüllrohr mit einem Außendurchmesser im Bereich von 90 und 250 mm und vorzugsweise mit einem Außendurchmesser im Bereich von 120 bis 200 mm bereitgestellt wird. Diese Bauteile haben dabei jeweils eine Länge von mindestens 1 m.

Hierbei handelt es sich um relativ großvolumige Strukturelemente zur Bildung von Antiresonanzelementen. Dies vereinfacht die Handhabung. Zudem unterstützt bei vertikaler Anordnung von Hüllrohr und Strukturelementen die Gravitationskraft die Parallelität und die vertikale Ausrichtung der Strukturelement-Längsachsen, wenn die Strukturelemente jeweils an ihrem oberen stirnseitigen Ende an der Soll-Position positioniert sind.

Es hat sich als vorteilhaft erwiesen, wenn vor dem Ziehen der Hohlkernfaser gemäß Verfahrensschritt (d) mindestens eines der stirnseitigen Enden der Antiresonanzelement-Vorformlinge verschlossen wird.

Die beim erfindungsgemäßen Verfahren zum Faserziehprozess eingesetzte Vorform zeichnet sich durch einen großen Außendurchmesser aus. Da mit zunehmendem Außendurchmesser der Vorform die vorhandene absolute Geometriefehler beim Faserziehen stärker herunterskaliert werden, wird so eine präzisere Fertigung der Hohlkernfaser grundsätzlich ermöglicht.

Es hat sich jedoch gezeigt, dass eine beliebige Vergrößerung des Vorform-Außendurchmessers nicht automatisch zu einer präziseren Hohlkernfaser führt, sondern, dass zur Einhaltung eines maximalen relativen Geometriefehlers von 3,5% in der Wanddicke der Hohlkernfaser die folgende Maßnahme hilfreich ist:
Alle Antiresonanzelement-Vorformlinge oder mindestens ein Teil bilden Hohlkanäle und sind in der Regel beidseitig offen. Der freie Innendurchmesser der Hohlkanäle ist klein und liegt in der Vorform typischerweise im Bereich einiger Millimeter. Beim Heißformprozess wird die Vorform von außen erwärmt, so dass sich im Vorform-Volumen ein radialer Temperaturgradient einstellt. Dieser ist - bei ansonsten gleichen Prozessbedingungen - umso größer je dicker die Vorform ist. Es besteht die Gefahr, dass die Hohlkanäle infolge der Oberflächenspannung und abhängig von der lokalen Temperatur unterschiedlich schrumpfen. Diese Gefahr ist umso größer, je größer der radiale Temperaturgradient und je dicker die Vorform ist. Auf den zentralen Hohlkern hat der Temperaturgradient hingegen keine wesentlichen Auswirkungen. Um diesem Effekt bei den erfindungsgemäß relativ dicken Vorformen zu begegnen, wird beim Faserziehprozess mit vertikaler Orientierung der Längsachsen der Kernbereich (Hohlkern) offen gelassen, aber bei mindestens einem Teil der Antiresonanzelement-Vorformlinge das ansonsten offene, obere Ende verschlossen.

Durch die Versiegelung des oberen Endes hat jeder Hohlkanal ein anfängliches Gasvolumen. Beim Faserziehprozess wird das Gas erwärmt und der Druck in den Hohlkanälen erhöht, so dass sich diese von unten beginnend nach oben hin aufweiten. Da der Gasaustausch in den engen Hohlkanälen gering ist und das heiße Gas nicht nach oben entweichen kann, bestimmt der Temperatur-Unterschied zwischen unterem und oberem Vorform-Ende maßgeblich das Maß der Expansion, und zwar im Wesentlichen unabhängig vom ursprünglichen Hohlkanal-Durchmesser. Dieser Temperaturunterschied ist aber für alle Hohlkanäle unabhängig von ihrer radialen Position etwa gleich groß, so dass sich alle Hohlkanäle etwa im gleichen Maß aufweiten. Dadurch bleibt die ursprüngliche Verteilung der Hohlkanalgrößen in der dicken Vorform auch in der finalen Hohlkernfaser erhalten.

Dieses Konzept eignet sich auch für ein reproduzierbares und präzises Herstellungsverfahren für Antiresonante Hohlkernfasern im industriellen Maßstab. Es ist insbesondere zur präzisen Herstellung Antiresonanter Hohlkernfasern mit verschachtelten Antiresonanzelementen geeignet, die stark voneinander abweichende Innendurchmesser haben.

Die Exaktheit der Positionierung der Vorformlinge an der Innenmantelfläche des Hüllrohrs wird weiter verbessert, indem die Hüllrohr-Innenseite und/oder die Hüllrohr-Außenseite und/oder die ARE-Außenrohre-Innenseite und/oder die ARE-Außenrohr-Außenseite durch spanende Bearbeitung erzeugt wird, insbesondere durch Bohren, Fräsen, Schleifen, Honen und/oder Polieren

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Die spanende mechanische Bearbeitung umfasst vorzugsweise auch eine Strukturierung der Hüllrohr-Innenseite im Bereich von Soll-Positionen der Antiresonanzelement-Vorformlinge, indem diese mit einer sich in Richtung der Hüllrohr-Längsachse erstreckenden Längsstruktur versehen wird. Diese Längsstruktur umfasst beispielsweise Längsschlitze und/oder oder Längsrillen in der Hüllrohr-Innenwandung, die parallel zur Hüllrohr-Längsachse verlaufen und die bevorzugt durch Bohren, Sägen, Fräsen Schneiden oder Schleifen erzeugt werden.

Die sich in Richtung der Hüllrohr-Längsachse erstreckende Längsstruktur dient als Positionierungshilfe für die Antiresonanzelement-Vorformlinge. Sie erleichtert, dass die Antiresonanzelement-Vorformlinge vorgegebene definierte Positionen an der Innenseite des Hüllrohres einnehmen.

Bei einer bevorzugten Verfahrensvariante werden die oberen stirnseitigen Enden der Strukturelemente mittels einer Positionierungsschablone an der Soll-Position positioniert.

Dabei wird die Positionierungsschablone bevorzugt im Bereich einer Hüllrohr-Stirnseite, vorzugsweise im Bereich beider Hüllrohr-Stirnseiten, eingesetzt.

Die Positionierungsschablone weist beispielsweise einen in die Hüllrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung.

Es hat sich außerdem eine Verfahrensweise bewährt, bei der beim Ziehen der Hohlkernfaser gemäß Verfahrensschritt (d) mehrere Bestandteile der Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

Bestandteile der Vorform umfassen das Hüllrohr und die darin angeordneten Antiresonanzelement-Vorformlinge sowie zusätzliches Mantelmaterial, das beispielsweise in Form eines Überfangzylinders oder mehrerer Überfangzylinder bereitgestellt und auf die primäre Vorform kollabiert wird. Als die Viskosität von Quarzglas absenkende Dotierstoffe kommen vorzugsweise Fluor, Chlor und/oder Hydroxylgruppen zum Einsatz.

Die Dotierung ermöglich die Anpassung der thermischen Ausdehnungskoeffizienten von benachbarten Vorform-Bestandteilen, um Spannungen zu vermeiden oder zu vermindern. Sie kann auch dazu eingesetzt werden, die thermische Stabilität eines Bestandteils zu Gunsten der Stabilität eines benachbarten Bestandteils zu verringern.

So hat es sich beispielsweise als günstig erwiesen, wenn das Quarzglas des Hüllrohres bei einer Messtemperatur von 1250 °C eine um mindestens 0,5 dPa.s höhere Viskosität, vorzugsweise eine um mindestens 0,6 dPa.s, höhere Viskosität, aufweist als das Quarzglas von zusätzlich aufgebrachtem Mantelmaterial (bei Angabe der Viskosität als logarithmischer Wert in dPas).

Die geometrische Genauigkeit der Positionierung der Vorformlinge an der Innenmantelfläche des Hüllrohrs wird weiter verbessert wenn das Bereitstellen der primären Vorform ein Anordnen der Antiresonanzelement-Vorformlinge an Soll-Positionen der Innenseite der Hüllrohr-Wandung umfasst, wobei das Anordnen der Antiresonanzelement-Vorformlinge und/oder das Ziehen der Hohlkernfaser gemäß Verfahrensschritt (d) eine Fixierungs-Maßnahme und/oder eine Versiegelungsmaßnahme unter Einsatz einer amorphe SiO₂-Partikel enthaltenden Versiegelungs- oder Verbindungsmasse umfasst.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden. Dabei verhält sich die Versiegelungs- oder Verbindungsmasse wie Quarzglas; sie wird viskos und verformbar.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass ein Hüllrohr mit einem Außendurchmesser im Bereich von 90 und 250 mm und einer Länge von mindestens 1 m bereitgestellt wird, und dass rohrförmige Strukturelemente bereitgestellt werden, von denen mindestens ein Teil eine Wandstärke im Bereich von 0,2 und 2 mm und eine Länge von mindestens 1 m hat, und dass das Anordnen der Strukturelemente in der Hüllrohr-Innenbohrung gemäß Verfahrensschritt (c) bei vertikal orientierter Hüllrohr-Längsachse erfolgt, wobei die Strukturelemente jeweils an ihrem oberen stirnseitigen Ende an der Soll-Position positioniert sind.

Die Vorform ist Ausgangspunkt für die Herstellung der Antiresonanten Hohlkernfaser. Durch Elongieren der primären Vorform wird entweder direkt die Antiresonante Hohlkernfaser gezogen oder es wird zunächst durch Weiterverarbeitung der primären Vorform ein anderes Halbzeug erzeugt, das hier auch als "sekundäre Vorform" bezeichnet wird, und aus der die Antiresonante Hohlkernfaser gezogen werden kann.

In jedem Fall umfasst die Herstellung der Vorform den Einbau und das Verbinden von Antiresonanzelement-Vorformlingen mit einem Hüllrohr. Die Genauigkeit der Positionierung der Vorformlinge wird verbessert, indem das Hüllrohr, indem vergleichsweise großvolumige, rohrförmige und lange Strukturelemente bereitgestellt und diese mit vertikal orientierter Längsachse zusammengefügt werden, so dass die Handhabung vereinfacht wird und die Gravitationskraft zur exakten Positionierung und zur vertikalen Ausrichtung der Strukturelement-Längsachsen beiträgt.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenseite zugänglich; sie kann sich auch bis zur Außenseite durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: Ein mit Längsrillen versehenes maschinell bearbeitetes Hüllrohr zum Einsatz im erfindungsgemäßen Verfahren in einem Querschnitt,
- **Figur 2**: einen Ausschnitt von Längsstruktur und Antiresonanzelement aus Figur 1 in vergrößerter Darstellung, und
- **Figur 3**: einen Figur 2 entsprechenden Ausschnitt mit einer anderen Ausführungsform des Antiresonanzelements.

Es werden Hüllrohre eingesetzt, deren Wandung im Bereich der Innenmantelfläche mit Längsrillen versehen ist oder deren Wandung Längsschlitze aufweist. Die Längsrillen oder Längsschlitze sind beispielsweise in ungeradzahliger oder geradzahliger Symmetrie gleichmäßig um den Innenumfang des jeweiligen Hüllrohres verteilt, und sie dienen zur präzisen Positionierung der Antiresonanzelement-Vorformlinge an den Soll-Positionen im Quarzglas-Hüllrohr.

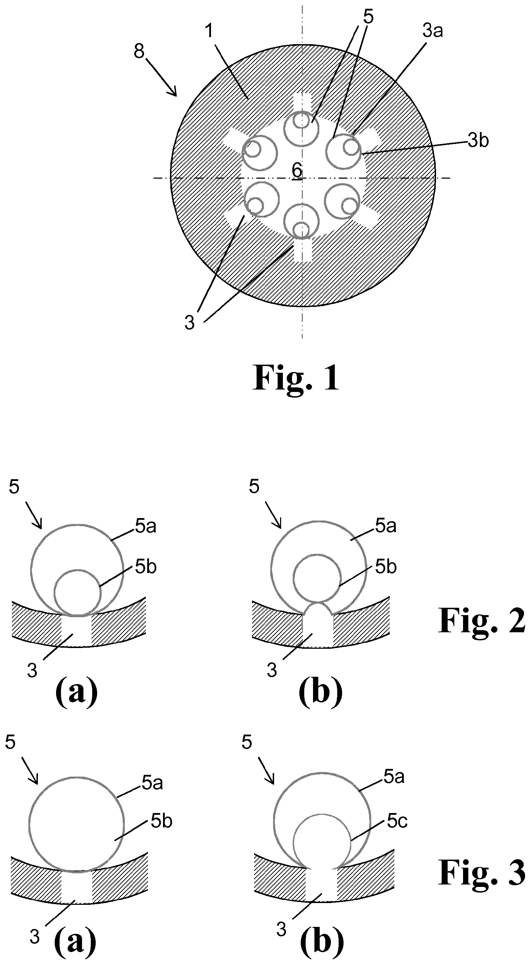

**Figur** 1 zeigt schematisch einen radialen Querschnitt eines dickwandigen Quarzglas-Hüllrohre 1 mit Längsrillen 3 an der Innenmantelfläche. Die Innenwandung des Hüllrohrs 1 wird mechanisch durch Bohren, Schleifen und Honen auf die vorgegebene Endabmessung gebracht. Danach werde an definierten azimutalen Positionen im gleichmäßigen Abstand die Längsrillen 3 in die Innenmantelfläche eingefräst. Die Anzahl der Längsrillen 3 entspricht der Anzahl der zu positionierenden Antiresonanzelement-Vorformlingen 5, im Ausführungsbeispiel sind es sechs Vorformlinge 5. Die Längsrillen 3 reichen von einem Hüllrohrende zum anderen, so dass sie die Stirnseiten durchstoßen. Anschließend werden die Schnittkanten (3a; 3b) verglast.

Die Schnittbreite und Schnitttiefe der Längsrillen 3 sind einheitlich und betragen jeweils 2 mm. Die darauf zu positionierenden Antiresonanzelement-Vorformlinge 5 haben einen im Wesentlichen runden Außenquerschnitt mit einem Durchmesser von beispielsweise 7,4 mm. Sie liegen den beiden Schnittkanten 3a; 3b der Längsrillen 3 und ragen in die Hüllrohr-Innenbohrung 6 hinein. Zur Fixierung werden die beiden Enden der Antiresonanzelement-Vorformlinge 5 im Bereich der Hüllrohr-Stirnseiten unter Einsatz einer SiO₂-haltigen Versiegelungs- und Verbindungsmasse angeklebt. Durch eine anschließende Längung dieses Ensembles werden die Antiresonanzelement-Vorformlinge 5 über ihre gesamte Länge mit den Schnittkanten 3a; 3b im Inneren des Hüllrohres 1 verbunden. Durch das Anlegen von Überdruck in der Innenbohrung 6 des Hüllrohres 1 kann überprüft werden, ob die Längsrillen 3 vollständig von den Antiresonanzelement-Vorformlingen 5 verschlossen sind. Die Längsrillen 3 dienen somit als exakte Positionierungshilfe, an der jeder Antiresonanzelement-Vorformling 5 genau positioniert und fixiert werden kann.

Anstelle des dickwandigen Hüllrohres 1 kann auch ein Hüllrohr mit geringerer Wanddicke zunächst mit den Antiresonanzelement-Vorformlingen 5 bestückt und auf der so erzeugten primären Vorform zusätzliches Mantelmaterial aufgebracht werden, insbesondere durch Überfangen mit einem durch mechanische Bearbeitung auf Endmaß gebrachten Überfangzylinder.

Beim Elongieren der Vorform 8 zur Hohlkernfaser oder zu einem anderen Vorprodukt der Hohlkernfaser kann in die Hohlkanäle, die sich in den Längsrillen 3 und den angeschmolzenen Antiresonanzelement-Vorformlingen 5 gebildet haben, Gas eingeleitet oder daraus abgezogen werden, um in den Hohlkanälen Überdruck oder Unterdruck zu erzeugen.

Sofern erforderlich oder gewünscht, kann damit die radiale Position der Antiresonanzelemente 5 in der Hüllrohr-Innenbohrung 6 verändert und korrigieret werden, wie in **Figur** 2 skizziert. Dabei zeigt Skizze (a) einen Antiresonanzelement-Vorformling 5 mit Außenrohr 5a und verschachteltem Innenelement (ARE-Innenrohr 5b) in der Ausgangsposition. Skizze (b) zeigt die durch Druck und Hitze verformte und bereichsweise nach innen eingestülpte Außenrohrwandung mit dem auf der Einstülpung fixierten ARE-Innenrohr 5b in einer gegenüber der Ausgangsposition veränderten radialen Position. So können auch Faserdesigns realisiert werden, die abweichend vom klassischen "Stack-and-Draw-Technik" auch nicht-hexagonale Symmetrie und insbesondere nicht ganzzahlige Symmetrie haben.

Durch Anlegen von Druck in den Hohlkanälen ist es auch möglich, einen Wandungsabschnitt eines Antiresonanzelement-Vorformlings 5 zum Inneren des Antiresonanzelement-Vorformlings "umzuklappen". **Figur 3(a)** zeigt einen Antiresonanzelement-Vorformling 5 mit einfachem Außenrohr 5a (ohne zusätzliche verschachtelte ARE-Innenrohre) in Ausgangsposition. Unter Einwirkung von Hitze und Druck wird der Wandungsabschnitt zwischen den beiden Kontaktlinien nach Innen aufgeblasen. Wie in **Figur 3(b)** gezeigt, entsteht so innerhalb des Außenrohrs 5a eine weitere Glasmembran 5c mit negative (konvex) gekrümmter Oberfläche, die ein verschachteltes Innenelement wie das ARE-Innenrohr 5b ("nested element") ersetzen kann.

Die Wanddicke der einzelnen Strukturelemente 5a, 5b der Antiresonanzelement-Vorformlinge 5 liegen im Bereich von 0,2 und 2 mm und der Außendurchmesser des Mantels 1 liegt im Bereich von 90 und 250 mm. Die Länge der Bauteile ist gleich und beträgt 1m.

Durch die Masse des Hüllrohrs und die vergleichsweise großvolumigen, rohrförmigen und lange Strukturelemente, verbunden mit der Positionierung der Antiresonanzelement-Vorformlinge in vertikal orientierter Längsachse wird eine geringe Auslenkung der Strukturelement-Längsachsen erreicht. Es wurde eine maximale Winkelabweichung von 0,3 Grad gemessen.

In Tabelle 1 sind Abmessungen dieser Bauteile für eine Antiresonante Hohlkernfaser angegeben, bei der die Wanddicke (WT) der Strukturelemente für die Antiresonanzelemente in der endgültigen Faser 0,55 µm beträgt. In der Spalte "Fiber" sind weitere Abmessungen der herzustellenden Hohlkernfasern angegeben:

**Tabelle 1**

| WT=0.55 µm | | **Fiber (µm)** | **Preform OD 90 (mm)** | **Preform OD 220 (mm)** |
|---|---|---|---|---|
| | | | | |
| **Hüllrohr** | **OD_{Mantel}** | 230 | 90 | 250 |
| | **ID_{Cane}** | 98 | 38 | 107 |
| | **OD/ID** | 2,3 | | |
| | | | | |
| **ARE** | **OD** | 29 | 11,3 | 31,5 |
| | **ID** | 27,9 | 10,9 | 30,3 |
| | **WT** | 0,55 | 0,22 | 0,60 |
| | **ID/OD** | 0,96 | 0,96 | 0,96 |
| | **OD/ID** | 1,04 | 1,04 | 1,04 |
| | | | | |
| **NE** | **OD** | 8,8 | 3,4 | 9,6 |
| | **ID** | 7,7 | 3 | 8,4 |
| | **WT** | 0,55 | 0,22 | 0,60 |
| | **ID/OD** | 0,75 | 0,88 | 0,88 |
| | **OD/ID** | 1,33 | 1,14 | 1,14 |
| | | | | |
| **Kern** | **D** | 40 | 15,7 | 43,5 |
| | | | | |
| **d** | **d** | 5,5 | 2,15 | 6,98 |

Dabei bedeuten:
- OD: Außendurchmesser
- ID: Innendurchmesser
- ARE:: ARE-Außenrohr 5a des Antiresonanzelement-Vorformlings
- NE: ARE-Innenrohr 5b des Antiresonanzelement-Vorformlings
- Kern D: Innendurchmesser des Hohlkerns
- d: Wanddicke

In Tabelle 2 sind die Abmessungen für eine Antiresonante Hohlkernfaser angegeben, bei der die Wanddicke (WT) der Strukturelemente in der endgültigen Faser 1,10 µm beträgt. In der Spalte "Fiber" sind die die Abmessungen der herzustellenden Hohlkernfasern angegeben. Es werden die bei Tabelle 1 verwendeten und dort erläuterten Kurzbezeichnungen benutzt.

**Tabelle 2**

| WT=1.10 µm | | **Fiber (µm)** | **Preform OD 90 (mm)** | **Preform OD 220 (mm)** |
|---|---|---|---|---|
| | | | | |
| **Hüllrohr** | **OD**_{Mantel} | 230 | 90 | 250 |
| | **ID**_{Cane} | 98 | 38 | 107 |
| | **OD/ID** | 2,3 | | |
| | | | | |
| **ARE** | **OD** | 29 | 11,3 | 31,5 |
| | **ID** | 26,8 | 10,5 | 29,1 |
| | **WT** | 1,10 | 0,43 | 1,20 |
| | **ID/OD** | 0,92 | 0,92 | 0,92 |
| | **OD/ID** | 1,08 | 1,08 | 1,08 |
| | | | | |
| **NE** | **OD** | 8,8 | 3,4 | 9,6 |
| | **ID** | 6,6 | 2,6 | 7,2 |
| **WT** | | 1,10 | 0,43 | 1,20 |
| **ID/OD** | | 0,75 | 0,75 | 0,75 |
| | **OD/ID** | 1,33 | 1,33 | 1,33 |
| | | | | |
| **Kern** | **D** | 40 | 15,7 | 43,5 |
| | | | | |
| **d** | **D** | 5,5 | 2,15 | 5,98 |
| | **z/R** | 0,90 | | |

## Patentansprüche

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (1), das eine Hüllrohr-Innenbohrung (6) und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen, die aus mehreren, miteinander verschachtelten rohrförmigen Strukturelementen (5a; 5b) zusammengesetzt sind, umfassend ein ARE-Außenrohr (5a) und ein darin eingesetztes ARE-Innenrohr (5b), wobei die Strukturelemente (5a; 5b), eine Strukturelemente-Längsachse aufweisen,
(c) Anordnen der Antiresonanzelement-Vorformlinge (5) an Soll-Positionen der Innenseite der Hüllrohr-Wandung unter Bildung einer primären Vorform (8) für die Hohlkernfaser, die einen hohlen Kernbereich und einen inneren Mantelbereich aufweist, und
(d) Elongieren der primären Vorform (8) zu der Hohlkernfaser oder Weiterverarbeitung der primären Vorform (8) zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** ein Hüllrohr (1) mit einem Außendurchmesser im Bereich von 90 und 250 mm und einer Länge von mindestens 1 m bereitgestellt wird, und dass rohrförmige Strukturelemente (5a; 5b) bereitgestellt werden, von denen mindestens ein Teil eine Wandstärke im Bereich von 0,2 und 2 mm und eine Länge von mindestens 1 m hat, und dass das Anordnen der Strukturelemente (5a; 5b) in der Hüllrohr-Innenbohrung gemäß Verfahrensschritt (c) bei vertikal orientierter Hüllrohr-Längsachse erfolgt, wobei die Strukturelemente (5a; 5b) jeweils an ihrem oberen stirnseitigen Ende an der Soll-Position positioniert sind.

2. Verfahren nach Anspruch 1, **dadurch gekennzeichnet, dass** ein Hüllrohr (1) mit einem Außendurchmesser im Bereich von 120 bis 200 mm bereitgestellt wird, und dass rohrförmige Strukturelemente (5a; 5b) bereitgestellt werden, von denen mindestens ein Teil eine Wandstärke im Bereich von 0,25 und 1 mm hat.

3. Verfahren nach Anspruch 1 oder 2, **dadurch gekennzeichnet, dass** vor dem Ziehen der Hohlkernfaser gemäß Verfahrensschritt (d) mindestens eines der stirnseitigen Enden der Antiresonanzelement-Vorformlinge (5) verschlossen wird.

4. Verfahren nach einem der vorhergehenden Ansprüche, **dadurch gekennzeichnet, dass** die Hüllrohr-Innenseite und/oder die Hüllrohr-Außenseite und/oder die ARE-Außenrohre-Innenseite und/oder die ARE-Außenrohr-Außenseite durch spanende Bearbeitung erzeugt wird, insbesondere durch Bohren, Fräsen, Schleifen, Honen und/oder Polieren

5. Verfahren nach einem der vorhergehenden Ansprüche, **dadurch gekennzeichnet, dass** die Hüllrohr-Innenseite durch spanende Bearbeitung im Bereich der Soll-Positionen mit einer sich in Richtung der Hüllrohr-Längsachse erstreckenden Längsstruktur (3) versehen wird.

6. Verfahren nach einem der vorhergehenden Ansprüche, **dadurch gekennzeichnet, dass** die oberen stirnseitigen Enden der Strukturelemente (5a; 5b) mittels einer Positionierungsschablone an der Soll-Position positioniert werden.

7. Verfahren nach Anspruch 6, **dadurch gekennzeichnet, dass** die Positionierungsschablone im Bereich einer Hüllrohr-Stirnseite, vorzugsweise im Bereich beider Hüllrohr-Stirnseiten, eingesetzt wird.

8. Verfahren nach einem der vorhergehenden Ansprüche, **dadurch gekennzeichnet, dass** beim Ziehen der Hohlkernfaser gemäß Verfahrensschritt (d) mehrere Bestandteile der Vorform (8) aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

9. Verfahren nach Anspruch 8, **dadurch gekennzeichnet, dass** gemäß Verfahrensschritt (d) zusätzliches Mantelmaterial aufkollabiert wird, und dass das Quarzglas des Hüllrohres (1) bei einer Messtemperatur von 1250 °C eine um mindestens 0,5 dPa·s höhere Viskosität, vorzugsweise eine um mindestens 0,6 dPa·s, höhere Viskosität, aufweist als das Quarzglas des zusätzlich aufgebrachten Mantelmaterials (bei Angabe der Viskosität als logarithmischer Wert in dPa·s).

10. Verfahren nach einem der vorhergehenden Ansprüche, **dadurch gekennzeichnet, dass** das Bereitstellen der primären Vorform (8) ein Anordnen der Antiresonanzelement-Vorformlinge (5) an Soll-Positionen der Innenseite der Hüllrohr-Wandung umfasst, wobei das Anordnen der Antiresonanzelement-Vorformlinge (5) und/oder das Ziehen der Hohlkernfaser gemäß Verfahrensschritt (d) eine Fixierungs-Maßnahme und/oder eine Versiegelungsmaßnahme unter Einsatz einer amorphe SiO₂-Partikel enthaltenden Versiegelungs- oder Verbindungsmasse umfasst.

11. Verfahren zur Herstellung einer Vorform für eine Antiresonante Hohlkernfaser, die einen sich entlang einer Faser-Längsachse erstreckenden Hohlkern und den Hohlkern umgebenden inneren Mantelbereich aufweist, der mehrere Antiresonanzelemente umfasst, mit den Verfahrensschritten:
(a) Bereitstellen eines Hüllrohres 81), das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen (5), die aus mehreren, miteinander verschachtelten rohrförmigen Strukturelementen (5a; 5b) zusammengesetzt sind, umfassend ein ARE-Außenrohr und ein darin eingesetztes ARE-Innenrohr, wobei die Strukturelemente (5a; 5b), eine Strukturelemente-Längsachse aufweisen,
(c) Anordnen der Antiresonanzelement-Vorformlinge an Soll-Positionen der Innenseite der Hüllrohr-Wandung unter Bildung einer primären Vorform (8) für die Hohlkernfaser, die einen hohlen Kernbereich und einen inneren Mantelbereich aufweist, und
(d) optionale Weiterverarbeitung der primären Vorform (8) zu einer sekundären Vorform für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** ein Hüllrohr (1) mit einem Außendurchmesser im Bereich von 90 und 250 mm und einer Länge von mindestens 1 m bereitgestellt wird, und dass rohrförmige Strukturelemente (5a; 5b) bereitgestellt werden, von denen mindestens ein Teil eine Wandstärke im Bereich von 0,2 und 2 mm und eine Länge von mindestens 1 m hat, und dass das Anordnen der Strukturelemente (5a; 5b) in der Hüllrohr-Innenbohrung gemäß Verfahrensschritt (c) bei vertikal orientierter Hüllrohr-Längsachse erfolgt, wobei die Strukturelemente (5a; 5b) jeweils an ihrem oberen stirnseitigen Ende an der Soll-Position positioniert sind.

## Claims

1. Method for producing an anti-resonant hollow core fiber comprising a hollow core extending along a longitudinal axis of the fiber and an inner sheath region surrounding the hollow core, which sheath region comprises a plurality of anti-resonance elements, having the method steps of:
(a) providing a cladding tube (1) comprising an inner bore (6) of the cladding tube and a longitudinal axis of the cladding tube along which a cladding tube wall extends, delimited by an inner side and an outer side,
(b) providing a number of anti-resonance element preforms that are composed of a plurality of nested tubular structural elements (5a; 5b), comprising an ARE outer tube (5a) and an ARE inner tube (5b) inserted therein, wherein the structural elements (5a; 5b) have a longitudinal structural element axis,
(c) arranging the anti-resonance element preforms (5) at target positions on the inner side of the cladding tube wall to form a primary preform (8) for the hollow core fiber, which comprises a hollow core region and an inner sheath region, and
(d) elongating the primary preform (8) to form the hollow core fiber, or further processing the primary preform (8) into a secondary preform from which the hollow core fiber is drawn, wherein the further processing comprises a single or repeated implementation of one or more of the following hot-forming processes:
(i) elongation,
(ii) collapse,
(iii) collapse and simultaneous elongation,
(iv) collapse of additional sheath material,
(v) collapse of additional sheath material and subsequent elongation,
(vi) collapse of additional sheath material and simultaneous elongation,
**characterized in that** a cladding tube (1) having an outer diameter in the range of 90 and 250 mm and a length of at least 1 m is provided, and **in that** tubular structural elements (5a; 5b) are provided of which at least a portion has a wall thickness in the range of 0.2 and 2 mm and a length of at least 1 m, and **in that** the structural elements (5a; 5b) are arranged in the inner bore of the cladding tube in accordance with method step (c) with a vertically oriented longitudinal axis of the cladding tube, wherein the structural elements (5a; 5b) are respectively positioned at the target position at their upper face end.

2. Method according to Claim 1, **characterized in that** a cladding tube (1) having an outer diameter in the range of 120 to 200 mm is provided, and **in that** tubular structural elements (5a; 5b) are provided of which at least a portion has a wall thickness in the range of 0.25 and 1 mm.

3. Method according to Claim 1 or 2, **characterized in that** at least one of the face ends of the anti-resonance element preforms (5) is sealed prior to drawing the hollow core fiber in accordance with method step (d).

4. Method according to any of the preceding claims, **characterized in that** the inner side of the cladding tube and/or the outer side of the cladding tube and/or the inner side of the ARE outer tube and/or the outer side of the ARE outer tube is produced by machining, in particular by drilling, milling, grinding, honing, and/or polishing

5. Method according to any of the preceding claims, **characterized in that** the inner side of the cladding tube is provided with a longitudinal structure (3), extending in the direction of the longitudinal axis of the cladding tube, by machining in the region of the target positions.

6. Method according to any of the preceding claims, **characterized in that** the upper face ends of the structural elements (5a; 5b) are positioned at the target position by means of a positioning template.

7. Method according to Claim 6, **characterized in that** the positioning template is used in the region of a cladding tube end face, preferably in the region of both cladding tube end faces.

8. Method according to any of the preceding claims, **characterized in that**, upon drawing the hollow core fiber in accordance with method step (d), a plurality of components of the preform (8) made of quartz glass are heated together and softened, wherein the quartz glass of at least some of the preform components contains at least one dopant that lowers the viscosity of quartz glass.

9. Method according to Claim 8, **characterized in that** additional sheath material is collapsed in accordance with method step (d), and **in that** the quartz glass of the cladding tube (1), at a measured temperature of 1250°C, has a viscosity at least 0.5 dPa·s higher, preferably a viscosity at least 0.6 dPa·s higher, than the quartz glass of the additionally applied sheath material (if the viscosity is specified as a logarithmic value in dPa·s).

10. Method according to any of the preceding claims, **characterized in that** the provision of the primary preform (8) comprises arranging the anti-resonance element preforms (5) at target positions of the inner side of the cladding tube wall, wherein the arranging of the anti-resonance element preforms (5) and/or the drawing of the hollow core fiber in accordance with method step (d) includes a fixing measure and/or a sealing measure using a sealing or bonding compound containing amorphous SiO₂ particles.

11. Method for producing a preform for an anti-resonant hollow core fiber comprising a hollow core extending along a longitudinal axis of the fiber and an inner sheath region surrounding the hollow core, which sheath region comprises a plurality of anti-resonance elements, having the method steps of:
(a) providing a cladding tube 81) comprising an inner bore of the cladding tube and a longitudinal axis of the cladding tube along which a cladding tube wall extends, delimited by an inner side and an outer side,
(b) providing a number of anti-resonance element preforms (5) that are composed of a plurality of nested tubular structural elements (5a; 5b), comprising an ARE outer tube and an ARE inner tube inserted therein, wherein the structural elements (5a; 5b) have a longitudinal structural element axis,
(c) arranging the anti-resonance element preforms at target positions on the inner side of the cladding tube wall to form a primary preform (8) for the hollow core fiber, which comprises a hollow core region and an inner sheath region, and
(d) optionally further processing the primary preform (8) to form a secondary preform for the hollow core fiber, wherein the further processing comprises a single or repeated implementation of one or more of the following hot-forming processes:
(i) elongation,
(ii) collapse,
(iii) collapse and simultaneous elongation,
(iv) collapse of additional sheath material,
(v) collapse of additional sheath material and subsequent elongation,
(vi) collapse of additional sheath material and simultaneous elongation,
**characterized in that** a cladding tube (1) having an outer diameter in the range of 90 and 250 mm and a length of at least 1 m is provided, and **in that** tubular structural elements (5a; 5b) are provided of which at least a portion has a wall thickness in the range of 0.2 and 2 mm and a length of at least 1 m, and **in that** the structural elements (5a; 5b) are arranged in the inner bore of the cladding tube in accordance with method step (c) with a vertically oriented longitudinal axis of the cladding tube, wherein the structural elements (5a; 5b) are respectively positioned at the target position at their upper face end.

## Revendications

1. Procédé de fabrication d'une fibre antirésonante à cœur creux, qui présente un cœur creux s'étendant le long d'un axe longitudinal de fibre et une zone enveloppante interne entourant le cœur creux, laquelle comprend plusieurs éléments antirésonants, présentant les étapes de procédé de :
(a) mise à disposition d'un tuyau de gaine (1), qui présente un trou interne (6) de tuyau de gaine et un axe longitudinal de tuyau de gaine le long duquel s'étend une paroi de tuyau de gaine délimitée par une face interne et une face externe,
(b) mise à disposition d'un certain nombre de préformes d'élément antirésonant, qui sont composées de plusieurs éléments structuraux (5a ; 5b) tubulaires emboîtés les uns dans les autres, comprenant un tuyau externe ARE (5a) et un tuyau interne ARE (5b) introduit dans celui-ci, les éléments structuraux (5a ; 5b) présentant un axe longitudinal d'élément structural,
(c) agencement des préformes d'élément antirésonant (5) en des positions de consigne de la face interne de la paroi de tuyau de gaine avec formation d'une préforme primaire (8) pour la fibre à cœur creux, laquelle préforme présente une zone de cœur creux et une zone enveloppante interne et
(d) allongement de la préforme primaire (8) en fibre à cœur creux ou transformation ultérieure de la préforme primaire (8) en une préforme secondaire à partir de laquelle la fibre à cœur creux est étirée, la transformation ultérieure comprenant la réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce qu'**un tuyau de gaine (1) présentant un diamètre externe dans la plage de 90 et 250 mm et une longueur d'au moins 1 m est mis à disposition, **en ce que** des éléments structuraux tubulaires (5a ; 5b) sont mis à disposition, dont au moins une partie présente une épaisseur de paroi dans la plage de 0,2 et 2 mm et une longueur d'au moins 1 m et **en ce que** l'agencement des éléments structuraux (5a ; 5b) dans le trou interne de tuyau de gaine selon l'étape de procédé (c) a lieu avec un axe longitudinal de tuyau de gaine orienté verticalement, les éléments structuraux (5a ; 5b) étant positionnés à chaque fois avec leur extrémité frontale supérieure dans la position de consigne.

2. Procédé selon la revendication 1, **caractérisé en ce qu'**un tuyau de gaine (1) présentant un diamètre externe dans la plage de 120 à 200 mm est mis à disposition et **en ce que** des éléments structuraux tubulaires (5a ; 5b) sont mis à disposition dont au moins une partie présente une épaisseur de paroi dans la plage de 0,25 et 1 mm.

3. Procédé selon la revendication 1 ou 2, **caractérisé en ce qu'**avant l'étirage de la fibre à cœur creux selon l'étape de procédé (d), au moins une des extrémités frontales des préformes d'élément antirésonant (5) est fermée.

4. Procédé selon l'une quelconque des revendications précédentes, **caractérisé en ce que** la face interne de tuyau de gaine et/ou la face externe du tuyau de gaine et/ou la face interne du tuyau externe ARE et/ou la face externe du tuyau externe ARE est/sont générée(s) par usinage avec enlèvement de copeaux, en particulier par forage, fraisage, meulage, rodage et/ou polissage.

5. Procédé selon l'une quelconque des revendications précédentes, **caractérisé en ce que** la face interne du tuyau de gaine est pourvue, par usinage avec enlèvement de copeaux, dans la zone des positions de consigne, d'une structure longitudinale (3) s'étendant dans la direction de l'axe longitudinal du tuyau de gaine.

6. Procédé selon l'une quelconque des revendications précédentes, **caractérisé en ce que** les extrémités frontales supérieures des éléments structuraux (5a ; 5b) sont positionnées au moyen d'un gabarit de positionnement dans la position de consigne.

7. Procédé selon la revendication 6, **caractérisé en ce que** le gabarit de positionnement est utilisé dans la zone d'une face frontale de tuyau de gaine, de préférence dans la zone des deux faces frontales de tuyau de gaine.

8. Procédé selon l'une quelconque des revendications précédentes, **caractérisé en ce que**, lors de l'étirage de la fibre à cœur creux selon l'étape de procédé (d), plusieurs constituants de la préforme (8) en verre de quartz sont chauffés et ramollis ensemble, le verre de quartz d'au moins quelques-uns des constituants de préforme contenant au moins un dopant qui abaisse la viscosité du verre de quartz.

9. Procédé selon la revendication 8, **caractérisé en ce que**, selon l'étape de procédé (d), du matériau enveloppant supplémentaire est écrasé et **en ce que** le verre de quartz du tuyau de gaine (1) présente, à une température de mesure de 1 250 °C, une viscosité supérieure d'au moins 0,5 dPa·s, de préférence une viscosité supérieure d'au moins 0,6 dPa·s à celle du verre de quartz du matériau enveloppant appliqué en plus (avec une indication de la viscosité en tant que valeur logarithmique en dPa·s).

10. Procédé selon l'une quelconque des revendications précédentes, **caractérisé en ce que** la mise à disposition de la préforme primaire (8) comprend un agencement des préformes d'élément antirésonant (5) en des positions de consigne de la face interne de la paroi de tuyau de gaine, l'agencement des préformes d'élément antirésonant (5) et/ou l'étirage de la fibre à cœur creux selon l'étape de procédé (d) comprenant une mesure de fixation et/ou une mesure de scellement à l'aide d'une masse de scellement ou de collage contenant des particules amorphes de SiO₂.

11. Procédé de fabrication d'une préforme pour une fibre antirésonante à cœur creux, qui présente un cœur creux s'étendant le long d'un axe longitudinal de fibre et une zone enveloppante interne entourant le cœur creux, laquelle zone enveloppante comprend plusieurs éléments antirésonants, présentant les étapes de procédé de :
(a) mise à disposition d'un tuyau de gaine 81), qui présente un trou interne de tuyau de gaine et un axe longitudinal de tuyau de gaine le long duquel s'étend une paroi de tuyau de gaine délimitée par une face interne et une face externe,
(b) mise à disposition d'un certain nombre de préformes (5) d'élément antirésonant, qui sont composées de plusieurs éléments structuraux (5a ; 5b) tubulaires emboîtés les uns dans les autres, comprenant un tuyau externe ARE et un tuyau interne ARE introduit dans celui-ci, les éléments structuraux (5a ; 5b) présentant un axe longitudinal d'élément structural,
(c) agencement des préformes d'élément antirésonant en des positions de consigne de la face interne de la paroi de tuyau de gaine avec formation d'une préforme primaire (8) pour la fibre à cœur creux, laquelle préforme présente une zone de cœur creux et une zone enveloppante interne et
(d) transformation ultérieure éventuelle de la préforme primaire (8) en une préforme secondaire pour la fibre à cœur creux, la transformation ultérieure comprenant la réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce qu'**un tuyau de gaine (1) présentant un diamètre externe dans la plage de 90 et 250 mm et une longueur d'au moins 1 m est mis à disposition, **en ce que** des éléments structuraux tubulaires (5a ; 5b) sont mis à disposition, dont au moins une partie présente une épaisseur de paroi dans la plage de 0,2 et 2 mm et une longueur d'au moins 1 m et **en ce que** l'agencement des éléments structuraux (5a ; 5b) dans le trou interne de tuyau de gaine selon l'étape de procédé (c) a lieu avec un axe longitudinal de tuyau de gaine orienté verticalement, les éléments structuraux (5a ; 5b) étant positionnés à chaque fois avec leur extrémité frontale supérieure dans la position de consigne.
